# EUROPEAN PATENT SPECIFICATION

(11) **EP 4 230 773 B1**
(45) Date of publication and mention of the grant of the patent: **01.04.2026**
(21) Application number: 21880201.5
(22) Date of filing: 14.10.2021
(51) Int. Cl.: C25B 11/073, B01J 23/889, B01J 37/02, B01J 37/08, B01J 37/14

(54) **ANODE FOR ALKALINE WATER ELECTROLYSIS AND METHOD FOR PRODUCING SAME**
ANODE FÜR ALKALISCHE WASSERELEKTROLYSE UND VERFAHREN ZUR HERSTELLUNG DAVON
ANODE POUR ÉLECTROLYSE D'EAU ALCALINE ET SON PROCÉDÉ DE PRODUCTION

(30) Priority: 15.10.2020 JP 2020174096
(43) Date of publication of application: 23.08.2023
(73) Proprietor: Kyoto University, Kyoto-shi, Kyoto 606-8501 (JP); NATIONAL UNIVERSITY CORPORATION YOKOHAMA NATIONAL UNIVERSITY, Yokohama-shi Kanagawa 240-8501 (JP); De Nora Permelec Ltd, Fujisawa-shi, Kanagawa 252-0816 (JP)
(72) Inventor: UCHIMOTO, Yoshiharu, Kyoto-shi, Kyoto 606-8501 (JP); UCHIYAMA, Tomoki, Kyoto-shi, Kyoto 606-8501 (JP); MITSUSHIMA, Shigenori, Yokohama-shi, Kanagawa 240-8501 (JP); KURODA, Yoshiyuki, Yokohama-shi, Kanagawa 240-8501 (JP); NAGASAWA, Kensaku, Yokohama-shi, Kanagawa 240-8501 (JP); NISHIKI, Yoshinori, Fujisawa-shi, Kanagawa 252-0816 (JP)
(74) Representative: Wächtershäuser & Hartz Patentanwaltspartnerschaft mbB
(86) International application number: PCT/JP2021/038117
(87) International publication number: WO 2022/080466

(56) References cited:
- WO-A1-2019/172160
- JP-A- 2016 221 471
- JP-A- 2018 081 812
- JP-A- 2018 178 221
- JP-A- 2020 515 405
- JP-B1- 6 975 297
- US-A1- 2016 348 257
- IKUYA YAMADA ET AL: "Bifunctional Oxygen Reaction Catalysis of Quadruple Manganese Perovskites", ADVANCED MATERIALS, VCH PUBLISHERS, DE, vol. 29, no. 4, 25 November 2016 (2016-11-25), pages n/a, XP071818287, ISSN: 0935-9648, DOI: 10.1002/ADMA.201603004

## Description

### Technical Field

The present invention relates to an alkaline water electrolysis anode and a method for producing the same.

### Background Art

Hydrogen is secondary energy which is suitable for storage and transportation and has small environmental load, and therefore a hydrogen energy system using hydrogen as an energy carrier has been attracting attention. Currently, hydrogen is mainly produced by steam reforming of fossil fuel, or the like. However, from the viewpoint of problems of global warming and exhaustion of fossil fuel, hydrogen production by water electrolysis using renewable energy, such as solar power generation and wind power generation, is important in generic technology. Water electrolysis is low cost, suitable for enlargement of scale, and therefore is a predominant technique for hydrogen production.

Among the elements which are used for water electrolysis, many of anode materials have an oxygen evolution overpotential of exceeding 0.3 V under actual operation conditions. It can be said that there is room for significant improvement in the oxygen evolution overpotential as compared to the fact that hydrogen evolution and chlorine evolution overpotentials utilized in current electrolysis industry are around 0.1 V. Note that when electric power having a large output fluctuation, such as renewable energy, is used as a power source for water electrolysis, an anode capable of stably retaining excellent catalytic activity over a long period of time is in the development stage and has not yet been put into practical use.

Current practical water electrolysis is largely divided into two. One is alkaline water electrolysis, in which a high-concentration alkali aqueous solution is used for an electrolyte. The other is solid polymer electrolyte water electrolysis, in which a solid polymer electrolyte (SPE) membrane is used for an electrolyte. When large-scale hydrogen production is performed by water electrolysis, it is said that alkaline water electrolysis, in which an inexpensive material, such as an iron group metal including nickel and the like, is used, is more suitable than solid polymer electrolyte water electrolysis, in which an electrode using a large amount of an expensive noble metal is used.

With respect to the high-concentration alkali aqueous solution, electric conductivity becomes high as the temperature increases, but corrosiveness also becomes high. Therefore, the upper limit of the operation temperature is controlled to about 80 to about 90°C. The electrolytic cell voltage has been improved to 2 V or less at a current density of 0.6 A·cm⁻² by the development of constitutional materials and various piping materials for an electrolytic cell, which are high-temperature resistant and resistant to a high-concentration alkali aqueous solution, and the development of a low-resistivity separator and an electrode which has an enlarged surface area and has a catalyst applied thereon.

A nickel-based material which is stable in a high-concentration alkali aqueous solution is used as an alkaline water electrolysis anode, and it has been known that in the case of alkaline water electrolysis using a stable power source, a nickel-based anode has a life of several decades or longer. However, when renewable energy is used as a power source, severe conditions, such as sudden start/shutdown and abrupt load fluctuation, are frequent, and therefore deterioration in performance of the nickel-based anode has been problematic.

Both of the reaction of producing a nickel oxide and the reaction of reducing the produced nickel oxide progress on the surface of nickel-based material. Therefore, elimination of an electrode catalyst formed on the surface of nickel-based material is facilitated with the progress of these reactions. When the electric power for electrolysis is not supplied, the electrolysis stops, and the nickel-based anode is retained at a potential lower than the oxygen evolution potential (1.23 V vs. RHE) and higher than the potential of a hydrogen evolution cathode, which is a counter electrode, (0.00 V vs. RHE). In the electrolytic cell, electromotive force due to various chemical species is generated, so that the anode potential is retained low, and the reaction of reducing the nickel oxide is facilitated by the progress of a battery reaction.

A current generated by the battery reaction leaks through manifold in the case of, for example, an electrolytic stack obtained by combining a plurality of cells, such as an anode chamber and a cathode chamber. Examples of the countermeasure for preventing such leakage of a current include a method of allowing a minute current to flow continuously during shutdown. However, to allow a minute current to flow continuously during shutdown, special power source control is needed, and oxygen and hydrogen are generated at all times, and therefore there is a problem that excessive labor has to be done in terms of operation management. In addition, preventing a battery reaction by removing liquid immediately after shutdown for the purpose of intentionally avoiding a reverse current state is possible, but it cannot be said that such measure is always an adequate approach when operation with electric power having a large output fluctuation, such as renewable energy, is supposed.

In the past, platinum group metals, platinum group metal oxides, valve metal oxides, iron group oxides, lanthanide group metal oxides, and the like have been utilized as a catalyst for an oxygen evolution anode (anode catalyst) which is used for alkaline water electrolysis. As other anode catalysts, alloy-based anode catalysts using nickel as a base, such as Ni-Co and Ni-Fe; nickel having an enlarged surface area; electrically conductive oxides (ceramic materials) including spinel-based anode catalysts, such as Co₃O₄ and NiCo₂O₄, and perovskite-based anode catalysts, such as LaCoO₃ and LaNiO₃; noble metal oxides; oxides containing a lanthanide group metal and a noble metal; and the like have also been known.

In recent years, as the oxygen evolution anode which is used for high-concentration alkaline water electrolysis, an alkaline water electrolysis anode obtained by forming a lithium-containing nickel oxide catalyst layer containing lithium and nickel in a predetermined molar ratio on the surface of a nickel substrate (Patent Literature 1) and an alkaline water electrolysis anode obtained by forming a catalyst layer containing a nickel-cobalt-based oxide, and an iridium oxide or a ruthenium oxide on the surface of a nickel substrate (Patent Literature 2) have been proposed. In addition, an oxygen evolution catalyst which is an A-site ordered perovskite oxide catalyst AMn₃Mn₄O₁₂ (A = La or Ca) has been proposed (Patent Literature 3). Further, CaMn₃O₆, CaMn₄O₈, and CaMn₇O₁₂ to be used as an oxygen reduction catalyst have been proposed (Patent Literatures 4 and 5).

In addition, it has been reported that LiNi_{0.8}Al_{0.2}O₂ having a layered rock salt type structure exhibits high oxygen evolution activity (Non-Patent Literature 1). It is presumed that Al plays a role of stabilizing the structure during polarization due to a synergistic effect with Ni. The layered rock salt structure has been developed by a thermal treatment in an oxygen gas. Attention is paid on Al³⁺ doping because of stabilization of Ni³⁺ in the LiNiO₂ layer and suppression of mixing of Ni²⁺ in the Li⁺ layer. Further, it has been reported that LiNi_{0.8}Fe_{0.2}O₂ having a layered rock salt type structure exhibits high oxygen evolution activity (Non-Patent Literature 2).

### Citation List

### Patent Literature

Patent Literature 1: Japanese Patent Laid-Open No. 2015-86420
Patent Literature 2: Japanese Patent Laid-Open No. 2017-190476
Patent Literature 3: Japanese Patent No. 5869169
Patent Literature 4: U.S. Patent No. 4101716
Patent Literature 5: Chinese Patent No. 110416559

### Non-Patent Literature

Non-Patent Literature 1: Gupta, A.; Chemelewski, W. D.; Buddie Mullins, C.; Goodenough, Adv Mater., 2015, 27 (39), 6063-7.
Non-Patent Literature 2: Zhu, K.; Wu, T.; Zhu, Y.; Li, X.; Li, M.; Lu, R.; Wang, J.; Zhu, X.; Yang, W., ACS Energy Letters 2017, 2 (7), 1654-1660.

### Summary of Invention

### Technical Problem

However, there has been a problem that even in the alkaline water electrolysis anodes proposed in Patent Literatures 1 and 2, when electric power having a large output fluctuation, such as renewable energy, is used as a power source, the performance is likely to be lowered, making it difficult to use the anodes stably over a long period of time. Note that Patent Literature 3 describes nothing about an effect obtained by controlling the amount of Ni. Further, Patent Literatures 4 and 5 describe nothing about oxygen evolution. In addition, it cannot necessarily be said that even LiNi_{0.8}Al_{0.2}O₂ reported in Non-Patent Literature 1 and LiNi_{0.8}Fe_{0.2}O₂ reported in Non-Patent Literature 2 are sufficiently highly active, and there has been still room for further improvement.

The present invention has been completed in view of such problems of the conventional techniques, and an object of the present invention is to provide an alkaline water electrolysis anode such that even when electric power having a large output fluctuation, such as renewable energy, is used as a power source, the electrolysis performance is unlikely to be deteriorated and excellent catalytic activity is retained stably over a long period of time. In addition, another object of the present invention is to provide a method for producing the alkaline water electrolysis anode.

### Solution to Problem

As a result of diligent studies in order to solve the problems, the present inventors have found that by controlling the content of Ni in a metal composite oxide having a quadruple perovskite oxide structure to change the Mn(A')-Mn(B) bond distance, reaction activation is brought about, and have completed the present invention. It has been reported that quadruple perovskite oxide AA'₃B₄O₁₂ exhibits higher catalytic activity for oxygen evolution than a simple perovskite oxide ABO₃ having the same B-site elements. One of the reasons for this is that the quadruple perovskite oxide has a new adsorption site in which one oxygen atom in the structure is deficient and which is advantageous for reaction. It is presumed that an O-O dimer is formed as an intermediate by depriving an electron from a hydroxyl ion adsorbed to this adsorption site, and the stability of the O-O bond in the A'-B site is changed by a decrease in the bond length, caused by partially substituting Mn(B) with Ni, thereby resulting in easy release as oxygen.

That is, according to the present invention, an alkaline water electrolysis anode described below and as defined in the appended claims is provided.

### Advantageous Effects of Invention

The present invention can provide an alkaline water electrolysis anode being such that even when electric power having a large output fluctuation, such as renewable energy, is used as a power source, the electrolysis performance is unlikely to be deteriorated, and excellent catalytic activity is retained stably over a long period of time. Further, the present invention can provide a method for producing the alkaline water electrolysis anode.

### Brief Description of Drawings

[Figure 1] Figure 1 is a section view schematically showing one embodiment of an alkaline water electrolysis anode of the present invention.
[Figure 2] Figure 2 is a diagram schematically showing a crystal structure (quadruple perovskite oxide structure) of metal composite oxides (catalysts).
[Figure 3] Figure 3 is a graph showing synchrotron radiation X-ray diffraction patterns for metal complex oxides (catalysts).
[Figure 4] Figure 4(a) is a graph showing Mn K-edge XANES spectra for metal composite oxides (catalysts) and Figure 4(b) is a graph showing Ni K-edge XANES spectra for metal composite oxides (catalysts).
[Figure 5] Figure 5(a) shows results of linear sweep voltammetry measurement (LSV curves), Figure 5(b) shows Tafel plots, and Figure 5(c) is a graph showing correlation between Mn(A')-Mn(B) bond distance and current density.

### Description of Embodiments

### <Alkaline Water Electrolysis Anode>

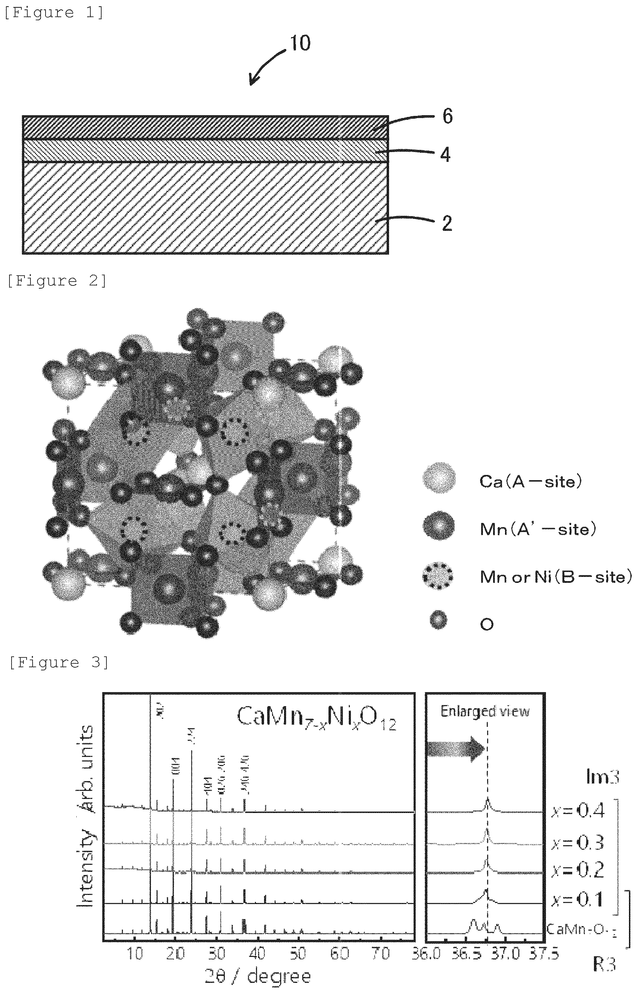

Figure 1 is a section view schematically showing one embodiment of an alkaline water electrolysis anode of the present invention. As shown in Figure 1, an alkaline water electrolysis anode 10 of the present embodiment is provided with an electrically conductive substrate 2, an intermediate layer 4 formed on the surface of the electrically conductive substrate 2, and a catalyst layer 6 formed on the surface of the intermediate layer 4. Hereinafter, the details on the alkaline water electrolysis anode of the present invention (hereinafter, also simply referred to as "anode") will be described.

### <Electrically Conductive Substrate>

The electrically conductive substrate 2 is an electric conductor that conducts electricity for electrolysis and is an element having a function as a carrier that carries the intermediate layer 4 and the catalyst layer 6. At least a surface of the electrically conductive substrate 2 (the surface on which the intermediate layer 4 and the catalyst layer 6 are formed) is formed with nickel or a nickel base alloy. That is, the whole of the electrically conductive substrate 2 may be formed with nickel or a nickel base alloy, or only the surface of the electrically conductive substrate 2 may be formed with nickel or a nickel base alloy. Specifically, the electrically conductive substrate 2 may be such that a coating of nickel or a nickel base alloy is formed on the surface of a metal material, such as iron, stainless steel, aluminum, or titanium, by plating or the like.

The thickness of the electrically conductive substrate is preferably 0.05 to 5 mm. The shape of the electrically conductive substrate is preferably a shape having an opening for removing bubbles of oxygen, hydrogen, and the like to be produced. For example, an expanded mesh or a porous expanded mesh can be used as the electrically conductive substrate. When the electrically conductive substrate has a shape having an opening, the aperture ratio of the electrically conductive substrate is preferably 10 to 95%.

### (Intermediate Layer)

The anode of the present invention is preferably provided with an intermediate layer disposed between the electrically conductive substrate and the catalyst layer. As shown in Figure 1, the intermediate layer 4 is a layer formed on the surface of the electrically conductive substrate 2. The intermediate layer 4 suppresses corrosion or the like of the electrically conductive substrate 2 and fixes the catalyst layer 6 stably to the electrically conductive substrate 2. In addition, the intermediate layer 4 also serves as a role of supplying a current quickly to the catalyst layer 6. The intermediate layer 4 is preferably formed with a lithium-containing nickel oxide represented by composition formula LiₓNi₂₋ₓO₂ (0.02≤x≤0.5). When x in the compositional formula is less than 0.02, the electric conductivity is somewhat insufficient in some cases. On the other hand, when x exceeds 0.5, the physical strength and the chemical stability are somewhat lowered in some cases. The intermediate layer 4 formed with a lithium-containing nickel oxide represented by the compositional formula has enough electric conductivity for electrolysis, and exhibits excellent physical strength and chemical stability even after the use for a long period of time.

The thickness of the intermediate layer is preferably 0.01 µm or more and 100 µm or less, more preferably 0.1 µm or more and 10 µm or less. When the thickness of the intermediate layer is less than 0.01 µm, the above-described functions are not exhibited. On the other hand, even if the thickness of the intermediate layer is set in such a way as to exceed 100 µm, the above-described functions are unlikely to be exhibited because the voltage loss due to the resistance in the intermediate layer is large, and it is somewhat disadvantageous in terms of production costs or the like in some cases.

### (Catalyst Layer)

The catalyst layer 6 is a layer that is formed on the surface of the intermediate layer 4 and has catalytic ability. By interposing the intermediate layer 4, the catalyst layer 6 is more firmly fixed on the electrically conductive substrate 2.

The catalyst layer is a layer containing a metal composite oxide having a quadruple perovskite oxide structure, and is preferably a layer substantially formed with a metal composite oxide having a quadruple perovskite oxide structure. Then, this metal composite oxide contains calcium (Ca), manganese (Mn), and nickel (Ni), and has an atom ratio of Ca/Mn/Ni/O of (1.0)/(6.6 to 6.9)/(0.1 to 0.4)/12.0. When the catalyst layer containing a metal composite oxide having a composition in which the ratio of Ca, Mn, Ni, and O is as described above is provided, thereby the electrolysis performance is unlikely to be deteriorated and excellent catalytic activity can be retained stably over a long period of time even when electric power having a large output fluctuation, such as renewable energy, is used as a power source.

The thickness of the catalyst layer is preferably 0.01 µm or more and 100 µm or less, more preferably 0.1 µm or more and 10 µm or less. When the thickness of the catalyst layer is less than 0.01 µm, the above-described functions are not exhibited. On the other hand, even if the thickness of the catalyst layer is set in such a way as to exceed 100 µm, the above-described functions are unlikely to be exhibited because the voltage loss due to the resistance in the catalyst layer is large, and it is somewhat disadvantageous in terms of production costs or the like in some cases.

### <Method for Producing Alkaline Water Electrolysis Anode>

Next, a method for producing an alkaline water electrolysis anode of the present invention will be described. The method for producing an anode, which will be described below, is a method for suitably producing the above-described alkaline water electrolysis anode. The method for producing an anode of the present invention includes a metal composite oxide preparation step and a catalyst layer formation step. The metal composite oxide preparation step is a step of subjecting a precursor containing a calcium component, a manganese component, and a nickel component to a thermal treatment at 400 to 900°C in an oxygen-containing atmosphere to obtain a metal composite oxide having a quadruple perovskite oxide structure. In addition, the catalyst layer formation step is a step of forming a catalyst layer containing the metal composite oxide on the surface of the electrically conductive substrate.

Note that, if necessary, an intermediate layer can be disposed between the electrically conductive substrate and the catalyst layer, as described above. A method for producing an anode in which an intermediate layer is disposed further includes, prior to the above-described catalyst layer formation step, a step (coating step) of coating an aqueous solution containing a lithium ion and a nickel ion on the surface of the electrically conductive substrate, and a step (intermediate layer formation step) of subjecting the electrically conductive substrate on which the aqueous solution has been coated to a thermal treatment, thereby forming, on the surface of the electrically conductive substrate, an intermediate layer containing a lithium-containing nickel oxide represented by compositional formula LiₓNi₂₋ₓO₂ wherein 0.02≤x≤0.5.

### (Pre-treatment Step)

The electrically conductive substrate is preferably subjected to a chemical etching treatment in advance for the purpose of removing contamination particles of a metal, an organic substance, and the like on the surface before forming the intermediate layer and the catalyst layer. The consumption of the electrically conductive substrate by the chemical etching treatment is preferably set to about 30 g/m² or more and about 400 g/m² or less. In addition, the surface of the electrically conductive substrate is preferably subjected to a roughening treatment in advance for the purpose of enhancing the adhesiveness with the intermediate layer and the catalyst layer. Examples of the means for the roughening treatment include a blast treatment in which a powder is sprayed, an etching treatment using an acid that can dissolve the substrate, and plasma spraying.

### (Coating Step)

In the coating step, an aqueous solution containing a lithium ion and a nickel ion is coated on the surface of the electrically conductive substrate. The intermediate layer is formed by a so-called thermal decomposition method. When the intermediate layer is formed by the thermal decomposition method, an aqueous solution of a precursor of the intermediate layer is first prepared. As the precursor containing a lithium component, a known precursor, such as lithium nitrate, lithium carbonate, lithium chloride, lithium hydroxide, and a lithium carboxylate, can be used. Examples of the lithium carboxylate include lithium formate and lithium acetate. As the precursor containing a nickel component, a known precursor, such as nickel nitrate, nickel carbonate, nickel chloride, and a nickel carboxylate, can be used. Examples of the nickel carboxylate include nickel formate and nickel acetate. It is particularly preferable to use at least one of a lithium carboxylate and a nickel carboxylate in particular as the precursor because thereby a dense intermediate layer can be formed even when calcination is performed at a low temperature, as will be described later.

### (Intermediate Layer Formation Step)

In the intermediate layer formation step, the electrically conductive substrate on which the aqueous solution has been coated is subjected to a thermal treatment. Thereby, the intermediate layer containing a lithium-containing nickel oxide represented by compositional formula LiₓNi₂₋ₓO₂ (0.02≤x≤0.5) can be formed on the surface of the electrically conductive substrate. The thermal treatment temperature at the time when the intermediate layer is formed by the thermal decomposition method can appropriately be set. When the decomposition temperature of the precursor and the production costs are taken into consideration, the thermal treatment temperature is preferably set to 450 to 600°C, more preferably 450 to 550°C. For example, the decomposition temperature of lithium nitrate is about 430°C, and the decomposition temperature of nickel acetate is about 373°C. When the thermal treatment temperature is set to 450°C or higher, thereby each component can more surely be decomposed. When the thermal treatment temperature is set in such a way as to exceed 600°C, the oxidation of the electrically conductive substrate easily progresses, and the electrode resistance increases to bring about an increase in the voltage loss in some cases. The thermal treatment time may appropriately be set taking the reaction rate, the productivity, the oxidation resistance at the surface of the intermediate layer, and the like into consideration.

By appropriately setting the number of times of coating of the aqueous solution in the above-described coating step, the thickness of the intermediate layer to be formed can be controlled. Note that the coating and drying of the aqueous solution may be repeated for every layer until the uppermost layer is formed, and thereafter the thermal treatment may be performed on the whole layers, or the coating of the aqueous solution and the thermal treatment (pre-treatment) may be repeated for every layer until the uppermost layer is formed, and thereafter the thermal treatment may be performed on the whole layers. The temperature of the pre-treatment and the temperature of the thermal treatment on the whole layers may be the same or different. In addition, the time for the pre-treatment is preferably made shorter than the time for the thermal treatment on the whole layers.

### (Metal Composite Oxide Preparation Step)

In the metal composite oxide preparation step, a metal composite oxide is prepared by subjecting a precursor containing a calcium component, a manganese component, and a nickel component to a thermal treatment at 400 to 900°C in an oxygen-containing atmosphere. As the calcium component, a known compound, such as calcium nitrate, calcium carbonate, calcium chloride, calcium hydroxide, and a calcium carboxylate, can be used. Examples of the calcium carboxylate include calcium formate and calcium acetate. As the nickel component, a known compound, such as nickel nitrate, nickel carbonate, nickel chloride, and a nickel carboxylate, can be used. Examples of the nickel carboxylate include nickel formate and nickel acetate. It is preferable to use at least one of a calcium carboxylate and a nickel carboxylate in particular because thereby a denser catalyst layer can be formed. As the manganese component, a known compound, such as manganese nitrate, manganese carbonate, manganese chloride, and a manganese carboxylate, can be used. Examples of the manganese carboxylate include manganese formate and manganese acetate.

The metal complex oxide (CaMn₇₋ₓNiₓO₁₂) which is a target substance can be prepared by a citric acid complexation method. For example, predetermined amounts of a calcium component, a manganese component, and a nickel component are dissolved in nitric acid, and then a largely excessive amount of citric acid and a stoichiometric amount of 1,2-ethanediol are added thereto under stirring. The resultant solution is heated to around 300°C and the temperature was kept for a certain time, and thereby a dry powder which is the precursor can be obtained. The obtained precursor (dry powder) is subjected to a thermal treatment in an oxygen-containing atmosphere for 2 to 50 hours at 400 to 900°C, preferably 700 to 900°C, and thereby the metal composite oxide (hereinafter, also referred to as "CMO") which is the target substance can be obtained.

The oxygen partial pressure in the oxygen-containing atmosphere at the time when the precursor is subjected to the thermal treatment is preferably set to 0.2 atm or higher, more preferably 0.5 atm or higher. In addition, the flow rate of the gas containing oxygen to be supplied is preferably controlled to 5 mL/min or less, more preferably 2.5 mL/min or less, in terms of oxygen. When the flow rate of the gas is excessively large (excessively fast), production of the oxide is excessively accelerated in some cases, and therefore the composition of CMO is likely to deviate from the intended composition in some cases. Whether or not the obtained metal composite oxide (CMO) has a quadruple perovskite oxide structure can be ascertained by crystal structure analysis using XRD.

### (Catalyst Layer Formation Step)

In the catalyst layer formation step, the catalyst layer containing a metal composite oxide (CMO), which is a catalyst, is formed on the surface of the electrically conductive substrate. Thereby, the intended alkaline water electrolysis anode can be obtained. To form the catalyst layer on the surface of the electrically conductive substrate, a conventionally known method may appropriately be adopted, and the method is not particularly limited. For example, a catalyst ink is prepared by adding a catalyst (CMO) to a solvent containing a particular resin (Nafion (R)) or the like. Then, the prepared catalyst ink is coated on the surface of the electrically conductive substrate or the surface of the intermediate layer formed on the electrically conductive substrate, and, if necessary, dried by heating or the like, and thereby the catalyst layer can be formed on the surface of the electrically conductive substrate.

### <Use of Alkaline Water Electrolysis Anode>

The alkaline water electrolysis anode of the present invention can be used as an oxygen evolution anode at the time when alkaline water is electrolyzed. That is, use of the anode of the present invention can form an electrolytic cell, such as an alkaline water electrolytic cell. The types, constitution, and the like of the cathode and separator to be used together with the above-described anode are not particularly limited, and a cathode and a separator which are used in conventional alkaline water electrolysis can be used.

### (Cathode)

As the cathode, a substrate made of a material that is bearable to alkaline water electrolysis and a catalyst having a small cathode overpotential are preferably selected and used. As the cathode substrate, a nickel substrate, or a cathode substrate obtained by forming an active cathode by coating the nickel substrate can be used. Examples of the shape of the cathode substrate include an expanded mesh and a porous expanded mesh in addition to a plate shape.

The cathode material includes porous nickel having a large surface area, a Ni-Mo-based material, and the like. Besides, the cathode material includes Raney nickel-based materials, such as Ni-Al, Ni-Zn, and Ni-Co-Zn; sulfide-based materials, such as Ni-S; and hydrogen absorbing alloy-based materials, such as Ti₂Ni; and the like. The catalyst preferably has characteristics of low hydrogen overpotential, high stability against short-circuit, high poisoning resistance, and the like. As other catalysts, metals, such as platinum, palladium, ruthenium, and iridium, and oxides thereof are preferable.

### (Separator)

As the electrolysis separator, asbestos, non-woven fabric, an ion-exchange membrane, a porous polymer membrane, and a composite membrane of an inorganic substance and an organic polymer, and the like can be used. Specifically, an ion-permeable separator such that organic fiber cloth is incorporated in a mixture of a hydrophilic inorganic material, such as a calcium phosphate compound and calcium fluoride, and an organic binding material, such as polysulfone, polypropylene, and polyvinylidene fluoride, can be used. In addition, an ion-permeable separator such that stretched organic fiber cloth is incorporated in a film-forming mixture of an inorganic hydrophilic substance in the form of particles, such as oxides and hydroxides of antimony and zirconium, and an organic binder, such as a fluorocarbon polymer, polysulfone, polypropylene, polyvinyl chloride, and polyvinyl butyral, can be used.

By using an alkaline water electrolytic cell using the anode of the present invention as a constitutional element, a high-concentration alkali aqueous solution can be electrolyzed. The alkali aqueous solution that is used as the electrolyte is preferably an aqueous solution of an alkaline metal hydroxide, such as potassium hydroxide (KOH) or sodium hydroxide (NaOH). The concentration of the alkali aqueous solution is preferably 1.5% by mass or more and 40% by mass or less. In addition, the concentration of the alkali aqueous solution is preferably 15% by mass or more and 40% by mass or less because the electric conductivity is large, and the electric power consumption can be suppressed. Further, when the costs, the corrosiveness, the viscosity, the operability, and the like are taken into consideration, the concentration of the alkali aqueous solution is preferably 20% by mass or more and 30% by mass or less.

### Examples

Hereinafter, the present invention will specifically be described based on Examples, but the present invention is not limited to these Examples. Note that "parts" and "%" in Examples and Comparative Examples are each on a mass basis unless otherwise noticed.

### <Production of Alkaline Water Electrolysis Catalyst>

### (Production Example 1)

Stoichiometric amounts of CaCO₃, Mn(NO₃)₂·6H₂O, and Ni(NO₃)₂·6H₂O were dissolved in nitric acid. Citric acid in a five-fold molar excessive amount and 1,2-ethanediol in a stoichiometric amount were added to the solution under stirring, and then the resultant mixture was heated to 300°C to obtain a precursor in the form of a powder. The obtained precursor was calcined in the air at 400°C for 1 hours and at 675°C for 12 hours using a heating furnace. Subsequently, calcination was performed in the air at 900°C for 12 hours to obtain a target substance (CMO) in the form of a powder. A solution obtained by dissolving part of the obtained standard substance in an acid was used as a sample, and the composition was analyzed by inductively coupled plasma (ICP) emission spectroscopy. As an inductively coupled plasma emission spectrometer, "ICPS-8100CL," product name, (manufactured by SHIMADZU CORPORATION) was used. As a result, it was ascertained that the chemical composition of the obtained target substance (CMO) is represented by "CaMn₇₋ₓNiₓO₁₂" (five types of compositions wherein x=0.0, 0.1, 0.2, 0.3, and 0.4).

Figure 2 is a diagram schematically showing the crystal structure (quadruple perovskite oxide structure) of the metal composite oxides (catalysts). As shown in Figure 2, it is understood that when Mn(B) in the Mn(A')-Mn(B) bond in CaMn₇O₁₂ quadruple perovskite oxide structure is partially substituted with Ni, Ni is incorporated in the B-site of the host matrix without changing any of the state of Mn and the state of O.

Figure 3 is a graph showing synchrotron radiation X-ray diffraction patterns for the metal complex oxides (catalysts). As shown in Figure 3, it is understood that the phase transition of the crystal structure is clearly caused by doping of Ni. Note that the disappearance of some diffraction peaks of Ni-doped CMO suggests that a change in the crystal structure occurred at x=0.2. Rietveld precise analysis showed a distorted perovskite structure of triangular symmetry, R3⁻ space group in the case of x=0.0 and showed cubic symmetry, Im3⁻ space group in the case of x ≥0.2. In the case of x=0.1, both of the R3⁻ phase and the Im3⁻ phase were observed. Note that the metal composite oxide (catalyst) was not prepared in the case of x≥0.5 because impurities were present.

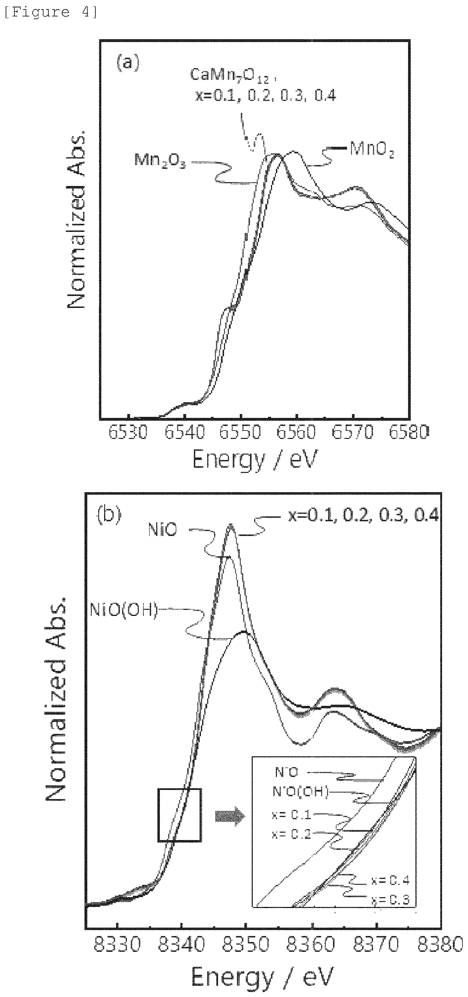

Figure 4(a) is a graph showing Mn K-edge XANES spectra for the metal composite oxides (catalysts) and Figure 4(b) is a graph showing Ni K-edge XANES spectra for the metal composite oxides (catalysts). As shown in Figures 4(a) and 4(b), the state of Mn remained constant regardless of the Ni doping level. It is presumed that the valence state of Ni is "+3" in all the samples because the absorption edge position is higher than that of NiO. Note that the O K-edge spectra were not changed. Therefore, neither the state of Mn nor the O2p band center, which are factors involved in oxygen evolution ability, are considered to be changed.

Each suspension was obtained by mixing 10 mg of the catalyst, 2 mg of acetylene black (manufactured by Denka Company Limited), 40 µL of a 5% Nafion (R) solution, and 20 µL of a 0.1 mol/L KOH aqueous solution. Each catalyst ink, which was a uniform suspension, was obtained by adding 1.94 mL of tetrahydrofuran to the obtained suspension, and sonicating the resultant mixture for 30 minutes.

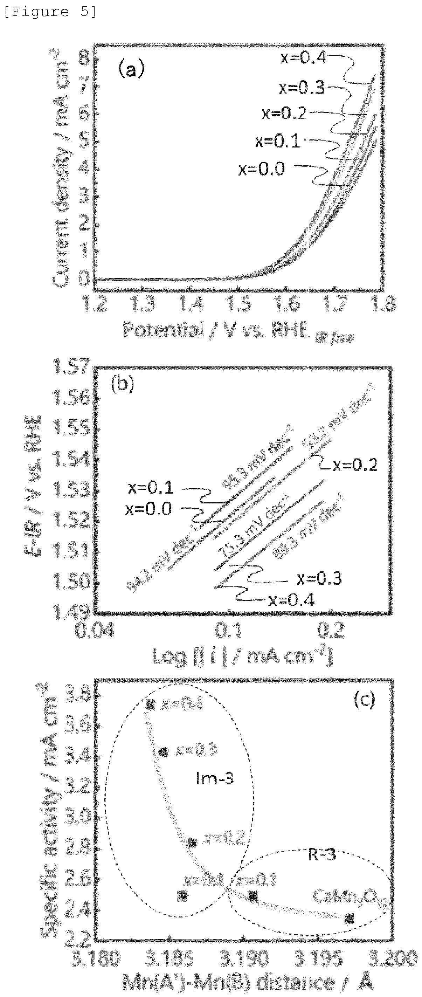

On a polished glassy carbon (GC) rotating disk electrode (RDE, manufactured by HOKUTO DENKO CORPORATION, diameter 5 mm, 0.196 cm²), 10 µL of the catalyst ink was dropped and then vacuum-dried at room temperature for 12 hours to obtain each working electrode. Then, electrolysis operation was performed using the following three-electrode cell connected to a potentiogalvanostat (trade name "MPG-205-NUC," manufactured by Bio-Logic Science Instruments SAS). Note that linear sweep voltammetry (LSV) was performed as a pre-treatment, and a current was measured at a potential of 1.2 to 1.8 V and a sweep rate of 5 mV/s while the electrode was rotated at 1,600 rpm. In addition, all the electrochemical experiments were conducted in a nitrogen atmosphere, iR correction (R was approximately 12.) was conducted for all the data after the measurement. Figure 5(a) shows results of the linear sweep voltammetry measurement (LSV curves), Figure 5(b) shows Tafel plots, and Figure 5(c) is a graph showing correlation between Mn(A')-Mn(B) bond distance and current density. [Three-electrode Cell]:
- Working electrode: catalyst-coated GC
- Reference electrode: reversible hydrogen electrode (RHE)
- Counter electrode: Pt wire
- Electrolyte: 0.1 mol/L KOH aqueous solution

As shown in Figure 5(a), it is understood that there is correlation between the catalytic activity and the amount of Ni doped and the best activity is exhibited in the case of x=0.4. Note that the decreasing tendency in OER activity corresponds to the decrease in x. In addition, as shown in Figure 5(b), all the Tafel slopes were about 94 mVdec⁻¹ regardless of x (Ni). It is suggested that the catalytic activity of Ni-doped CMO is not due to a change in the reaction path but to an increase in the reaction rate which is the rate-determining step. As shown in Figure 5(c), there was clear correlation between the catalytic activity for oxygen evolution and the Mn(A')-Mn(B) bond distance.

### <Production of Anode>

### (Example 1)

A nickel expanded mesh (10 cm × 10 cm, LW × 3.7 SW × 0.9 ST × 0.8 T) on which a chemical etching treatment was performed by immersing the nickel expanded mesh for 6 minutes in 17.5% hydrochloric acid heated to near the boiling point was prepared as an anode substrate. This expanded mesh was subjected to a blast treatment (0.3 MPa) with alumina particles of 60 mesh, and was then immersed for 6 minutes in 20% hydrochloric acid heated to near the boiling point to perform a chemical etching treatment. An aqueous solution containing components to be a precursor of a lithium-containing nickel oxide was coated, with a brush, on the surface of the anode substrate after the chemical etching treatment, and was then dried at 80°C for 15 minutes. Subsequently, the anode substrate was subjected to a thermal treatment at 600°C for 15 minutes in an oxygen atmosphere. The treatments from the coating of the aqueous solution to the thermal treatment were repeated 20 times to obtain an intermediate having an intermediate layer (composition: Li_{0.5}Ni_{1.5}O₂) formed on the surface of the anode substrate.

Next, an anode having a catalyst layer (composition: CaMn_{6.6}Ni_{0.4}O₁₂) formed on the surface of the intermediate layer was obtained by the same method as in Production Example 1 described above using the catalyst ink of the metal composite oxide (catalyst) (x=0.4) obtained in Production Example 1.

A small-sized zero-gap type electrolytic cell using a neutral separator was prepared using: the obtained anode; a separator (trade name "Zirfon" manufactured by AGFA-Gevaert NV); and an active cathode having a catalyst layer containing Ru and Pr oxide and formed thereon. The area of the electrodes was set to 19 cm². An electrolyte (25% KOH aqueous solution) was supplied to the anode chamber and the cathode chamber forming the electrolytic cell to perform electrolysis at a current density of 6 kA/m² for 6 hours in each chamber. The overpotential on that occasion was 250 mV. Subsequently, the anode and the cathode were brought into a short-circuit state (0 kA/m²) to shut down the electrolysis for 15 hours. Shutdown tests in which the operation from the electrolysis to the shutdown was defined as 1 cycle were conducted. As a result, it was ascertained that the voltage was kept stable in the shutdown tests of 16 times.

### Industrial Applicability

The alkaline water electrolysis anode of the present invention is suitable as, for example, an alkaline water electrolysis anode that forms electrolysis equipment or the like in which electric power having a large output fluctuation, such as renewable energy, is used as a power source.

### Reference Signs List

- 2: Electrically conductive substrate
- 4: Intermediate layer
- 6: Catalyst layer
- 10: Alkaline water electrolysis anode

## Claims

1. An alkaline water electrolysis anode comprising:
an electrically conductive substrate at least a surface of which comprises nickel or a nickel base alloy; and
a catalyst layer disposed on the surface of the electrically conductive substrate, the catalyst layer comprising a metal composite oxide having a quadruple perovskite oxide structure AA'₃B₄O₁₂, wherein
the metal composite oxide comprises calcium (Ca), manganese (Mn), and nickel (Ni), and has an atom ratio of Ca/Mn/Ni/O of (1.0)/(6.6 to 6.9)/(0.1 to 0.4)/12.0, wherein Mn(A')-Mn(B) bond distance is 3.18 to 3.19 Å.

2. The alkaline water electrolysis anode according to claim 1, further comprising an intermediate layer disposed between the electrically conductive substrate and the catalyst layer, the intermediate layer comprising a lithium-containing nickel oxide represented by compositional formula LiₓNi₂₋ₓO₂ wherein 0.02≤x≤0.5.

3. A method for producing an alkaline water electrolysis anode, comprising:
a step of subjecting a precursor comprising a calcium component, a manganese component, and a nickel component to a thermal treatment at 400 to 900°C in an oxygen-containing atmosphere to obtain a metal composite oxide having a quadruple perovskite oxide structure AA'₃B₄O₁₂; and
a step of forming a catalyst layer comprising the metal composite oxide on a surface of an electrically conductive substrate at least the surface of which comprises nickel or a nickel base alloy, wherein
the metal composite oxide comprises calcium (Ca), manganese (Mn), and nickel (Ni), and has an atom ratio of Ca/Mn/Ni/O of (1.0)/(6.6 to 6.9)/(0.1 to 0.4)/12.0, and wherein Mn(A')-Mn(B) bond distance is 3.18 to 3.19 Å.

4. The method for producing an alkaline water electrolysis anode according to claim 3, wherein the precursor is subjected to a thermal treatment in an oxygen-containing atmosphere having an oxygen partial pressure of 0.2 atm or higher.

## Patentansprüche

1. Anode für alkalische Wasserelektrolyse, umfassend:
ein elektrisch leitfähiges Substrat, wobei zumindest dessen Oberfläche Nickel oder eine Legierung auf Nickelbasis enthält; und
eine Katalysatorschicht, die auf der Oberfläche des elektrisch leitfähigen Substrats angeordnet ist, wobei die Katalysatorschicht ein Metallverbundoxid mit einer vierfachen Perowskitoxidstruktur AA'₃B₄O₁₂ umfasst, wobei
das Metallverbundoxid Calcium (Ca), Mangan (Mn) und Nickel (Ni) umfasst und ein Atomverhältnis von Ca/Mn/Ni/O von (1,0)/(6,6 bis 6,9)/(0,1 bis 0,4)/12,0 aufweist, wobei der Mn(A')-Mn(B)-Bindungsabstand 3,18 bis 3,19 Å beträgt.

2. Die Anode für alkalische Wasserelektrolyse gemäß Anspruch 1, die ferner eine Zwischenschicht umfasst, die zwischen dem elektrisch leitfähigen Substrat und der Katalysatorschicht angeordnet ist, wobei die Zwischenschicht ein lithiumhaltiges Nickeloxid umfasst, das durch die Zusammensetzungsformel LiₓNi₂₋xO₂ dargestellt wird, wobei 0,02≤ x≤0,5.

3. Verfahren zur Herstellung einer Anode für die alkalische Wasserelektrolyse, umfassend:
einen Schritt, bei dem ein Vorläufer, der eine Calciumkomponente, eine Mangankomponente und eine Nickelkomponente umfasst, einer thermischen Behandlung bei 400 bis 900 °C in einer sauerstoffhaltigen Atmosphäre unterzogen wird, um ein Metallverbundoxid mit einer vierfachen Perowskit-Oxidstruktur AA'₃B₄O₁₂ zu erhalten; und
einen Schritt des Bildens einer Katalysatorschicht, die das Metallverbundoxid umfasst, auf einer Oberfläche eines elektrisch leitfähigen Substrats, zumindest dessen Oberfläche Nickel oder eine Legierung auf Nickelbasis umfasst, wobei
das Metallverbundoxid Calcium (Ca), Mangan (Mn) und Nickel (Ni) umfasst und ein Atomverhältnis von Ca/Mn/Ni/O von (1,0)/(6,6 bis 6,9)/(0,1 bis 0,4)/12,0, aufweist und wobei der Mn(A')-Mn(B)-Bindungsabstand 3,18 bis 3,19 Å beträgt.

4. Das Verfahren zur Herstellung einer Anode für die alkalische Wasserelektrolyse gemäß Anspruch 3, wobei der Vorläufer einer thermischen Behandlung in einer sauerstoffhaltigen Atmosphäre mit einem Sauerstoffpartialdruck von 0,2 atm oder höher unterzogen wird.

## Revendications

1. Anode d'électrolyse d'eau alcaline comprenant :
un substrat électroconducteur dont au moins une surface comprend du nickel ou un alliage à base de nickel ; et
une couche de catalyseur disposée sur la surface du substrat électroconducteur, la couche de catalyseur comprenant un oxyde composite métallique présentant une structure d'oxyde de pérovskite quadruple AA'₃B₄O₁₂, dans laquelle
l'oxyde composite métallique comprend du calcium (Ca), du manganèse (Mn) et du nickel (Ni), et présente un rapport atomique Ca/Mn/Ni/O de (1,0)/(6,6 à 6,9)/(0,1 à 0,4)/12,0, dans laquelle la distance interatomique Mn(A')-Mn(B) est de 3,18 à 3,19 Å.

2. Anode d'électrolyse d'eau alcaline selon la revendication 1, comprenant en outre une couche intermédiaire disposée entre le substrat électroconducteur et la couche de catalyseur, la couche intermédiaire comprenant un oxyde de nickel contenant du lithium représenté par la formule de composition LiₓNi₂₋ₓO₂ dans laquelle 0,02 ≤ x ≤ 0,5.

3. Procédé de production d'une anode d'électrolyse d'eau alcaline, comprenant :
une étape consistant à soumettre un précurseur comprenant un composant de calcium, un composant de manganèse et un composant de nickel à un traitement thermique à 400 à 900 °C dans une atmosphère contenant de l'oxygène pour obtenir un oxyde composite métallique présentant une structure d'oxyde de pérovskite quadruple AA'₃B₄O₁₂ ; et
une étape consistant à former une couche de catalyseur comprenant l'oxyde composite métallique sur une surface d'un substrat électroconducteur dont au moins la surface comprend du nickel ou un alliage à base de nickel, dans lequel
l'oxyde composite métallique comprend du calcium (Ca), du manganèse (Mn) et du nickel (Ni), et présente un rapport atomique Ca/Mn/Ni/0 de (1,0)/(6,6 à 6,9)/(0,1 à 0,4)/12,0, et dans lequel la distance interatomique Mn(A')-Mn(B) est de 3,18 à 3,19 Å.

4. Procédé de production d'une anode d'électrolyse d'eau alcaline selon la revendication 3, dans lequel le précurseur est soumis à un traitement thermique dans une atmosphère contenant de l'oxygène présentant une pression partielle d'oxygène de 0,2 atm ou plus.
